(19) Europäisches Patentamt / European Patent Office / Office européen des brevets

(11) **EP 3 919 869 B1**

(12) **EUROPEAN PATENT SPECIFICATION**

(45) Date of publication and mention of the grant of the patent:
**02.08.2023 Bulletin 2023/31**

(21) Application number: **20178184.6**

(22) Date of filing: **04.06.2020**

(51) International Patent Classification (IPC):
**G01C 25/00** (2006.01)    **G01C 23/00** (2006.01)
**G01C 5/00** (2006.01)    **G01C 5/06** (2006.01)
**G01P 21/00** (2006.01)

(52) Cooperative Patent Classification (CPC):
**G01C 23/00; G01C 5/005; G01C 5/06; G01C 25/00**

(54) **METHOD FOR DETERMINING A POSITION ERROR CORRECTION ON A STATIC PRESSURE MEASUREMENT AT AN AIRCRAFT**

VERFAHREN ZUR BESTIMMUNG EINER POSITIONSFEHLERKORREKTUR BEI EINER STATISCHEN DRUCKMESSUNG AN EINEM FLUGZEUG

PROCÉDÉ POUR DÉTERMINER UNE CORRECTION D'ERREUR DE POSITION SUR UNE MESURE DE PRESSION STATIQUE DANS UN AÉRONEF

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.12.2021 Bulletin 2021/49**

(73) Proprietor: **Stichting Nationaal Lucht- en Ruimtevaart Laboratorium 1059 CM Amsterdam (NL)**

(72) Inventors:
• **Dumoulin, Thomas Eugene Francois Jean 2565 EN Den Haag (NL)**
• **Laban, Martin 1012 GH Amsterdam (NL)**

(74) Representative: **De Vries & Metman Overschiestraat 180 1062 XK Amsterdam (NL)**

(56) References cited:
**CN-A- 110 346 605**

**Description**

The invention relates to a method for determining a position error correction on a static pressure measurement at an aircraft flying through a flow field, in accordance with the preamble of the main claim.

Nowadays aircraft can determine their altitude by means of several ways. An aircraft can use GPS to determine the altitude above a certain reference sphere or ellipse, or it can use radio altimeter to determine the altitude above ground level, where the latter method works sufficiently at relatively low altitude.

However, the most conservative and reliable way an aircraft determines its altitude is by means of a static pressure measurement, for which the altitude is called pressure altitude. The aviation industry uses pressure altitude to define flight levels to manage air traffic within safe vertical separation. Due to weather phenomena the pressure field in the atmosphere varies with location and time on earth. This means that constant pressure altitude is not constant altitude above ground. However, as long as every aircraft uses the same reference for altitude, air traffic management can be handled adequately as each aircraft follows a certain pressure which is linked to a flight level.

A static pressure measurement at an aircraft is achieved by means of connecting a transducer (pressure sensor) with a tube to a small orifice which is oriented perpendicular to the airflow. In this manner the static pressure is measured purely without a contribution of the dynamic pressure. Therefore, such a static pressure orifice is located on the airframe of the aircraft either at a location on the aircraft's skin or on the side of a designated probe sticking out of the airframe. The airflow close to the surface of the aircraft or the surface of the probe will always flow perpendicular to the static pressure orifice.

However, the geometry (or configuration) of the aircraft influences the flow around the aircraft, as a result of which the static pressure is slightly changed there. For a fixed location of the static pressure orifice on the airframe, this change in static pressure, predominantly, is governed by the geometry and configuration of the aircraft, the engine setting, the angle at which the airflow reaches the aircraft (angle of attack $\alpha$ and angle of sideslip $\beta$), the relative velocity of the aircraft in terms of Mach number M and the relative atmospheric condition on the geometry in terms of Reynolds number Re. Therefore, the actual atmospheric static pressure is never measured when the aircraft moves through a flow field (or pressure field).

Thus, by determining altitude through a static pressure measurement there is always an error which is different for each aircraft, and for each aircraft it varies with the previously mentioned variables. If this error is unknown and uncorrected for in each aircraft, the measured pressure altitude in the atmosphere is also different for each aircraft and vertical separation between flight paths must increase to assure safe air traffic management. However, in the populous skies of the aviation industry at this moment a large vertical separation between flight paths induces problems in horizontal separation. For this reason the aviation industry has set flight level separation at 1000ft for the busy high altitude flight levels and for that a certain accuracy is required with respect to the static pressure measurement which can only be achieved through correcting this measurement for the error. This is one of the most common incentives to determine the static pressure measurement error for an aircraft.

A method for aircraft airspeed calibration based on a static pressure error correction model is known from the document CN110346605 A. In view of the above it is an object of the present invention to provide a method for determining a position error correction on a static pressure measurement at an aircraft flying through a flow field.

The method according to the invention is characterized in accordance with the characterizing part of the main claim and is based upon the considerations set forth below.

The error on a static pressure measurement due to the influence of aircraft geometry and configuration on the pressure field (or flow field) around the aircraft is called the Position Error (PE) and the correction on the static pressure measurement is called the Position Error Correction (PEC). This correction can be represented mathematically by means of equation (1), by multiplying a non-dimensional pressure coefficient $C_p$ with the dynamic pressure $\frac{1}{2}\rho V_{TAS}^2$. Here, the velocity $V_{TAS}$ is the so-called True Air Speed (TAS) of the aircraft.

$$p_{PEC} = C_p \frac{1}{2}\rho V_{TAS}^2 \qquad\qquad (1)$$

The method according to the present invention is applicable to flights outside of the transonic and supersonic flight regimes, and there the pressure coefficient $C_p$ can be represented by a smooth polynomial determined by a Taylor series expansion as a function of the variables previously mentioned, given by equation (2). This function holds for a fixed geometry, configuration and engine setting of an aircraft.

$$C_p = C_0 + C_1 M + C_2 \alpha + C_3 \beta + C_4 M^2 + C_5 \alpha^2 + C_6 \beta^2 + C_7 M\alpha + C_8 \log(R_e) +$$

$$H.O.T. \quad (2)$$

The objective of the method is to determine the constants ($C_0$, $C_1$, .. ) in this function for a specific aircraft. Once these constants have been determined, it is possible (based upon Equations (1) and (2)) to determine a correction on the static pressure measurement at that aircraft for arriving at a corrected static pressure measurement which corresponds with a true static pressure (here 'true static pressure' means a static pressure which would be obtained if there were no influence of the aircraft geometry and configuration).

It is noted that there are several existing methods for determining these constants which, among others, include a trailing cone or a static bomb, but these known methods require an extensive modification to the aircraft which is costly. In contrast, when using the newly developed method according to the present invention, no modification to the aircraft is required. This makes the method rather cost effective and easy to implement.

The foundation of the present method lies in a combination of performing calculations and flight tests. As a first step Computational Fluid Dynamics (CFD) is used along with a highly detailed 3D scan of relevant parts of the aircraft to determine an a priori result for the previously mentioned polynomial constants. The inherent advantage of a CFD model is that there are no random measurement errors. In addition, it also provides insight into how many High Order Terms (H.O.T.) are required to achieve the desired accuracy of the model fit.

To validate these CFD results, as a next step first flight tests with varying aircraft geometry and configuration are performed by means of low altitude flyby's at a ground station for an additional static pressure measurement. Especially with low wind situations, this method works very well since the static pressure measured at the ground station is the true static pressure of the surrounding atmosphere. A comparison between the static pressure measurement at the ground station and the static pressure measurement at the aircraft leads to a position error correction which should correspond as closely as possible with the position error correction resulting from the calculation according to Equations (1) and (2) using the constants determined during the CFD step mentioned before. The validation step includes a fine tuning of the constants for optimizing said correspondence.

A direct comparison between the static pressure measurement at the ground station and the static pressure measurement at the aircraft in accordance with the above only leads to accurate results if the measurements occur at the same altitude. In general, this only would be possible if the flyby's of the aircraft occur at exactly the same altitude as the altitude of the ground station. This, however, in general is not possible (but for exceptional situations, for example with a ground station at an elevated location in mountainous terrain, although this again might cause a significant position error on the ground measurement due to the influence of the topography of the terrain) and thus in most cases a further correction for a difference in altitude may improve the results.

Such a further correction is subject of embodiments of the method according to the present invention in accordance with sub claims 11-13.

By correcting the static pressure measured at the ground station to the altitude (preferably the GPS altitude) of the aircraft's static pressure sensor during the flyby's, by means of equation (6) and including humidity effects, both measurements can be directly compared to obtain the value for the position error correction (which is the left side of equation (1)).

$$\Delta p = \rho g \Delta h \quad\quad\quad (6)$$

However, the density of the air $\rho$ is obtained via the static temperature which is determined by means of the Mach number M, which again is obtained by means of the measured static pressure. Hence, there is a position error in the static temperature as well and an iterative loop is required to determine this density. The same applies for the right side of equation (1) where, accompanied by the density of the air, the $V_{TAS}$ is also determined by means of the Mach number. In this iteration loop the CFD model is used accompanied by an empirical tuned correction stemming from the flight tests.

After conducting these first steps, a first estimation of the constants of the Taylor expansion series according to Equation (2) is obtained which, however, only provides an accurate match at low altitudes.

Thus, the position error correction at higher altitudes is still unknown and the a priori model resulting from the previous steps must be tuned more extensively to extrapolate the polynomial to match accurately at high altitude. There, the Mach number and angle of attack correlation is considerably different and a wider range is covered for the polynomial fit as a function of these variables. For this tuning, in accordance with a next step of the method according to the present invention flight tests at altitude are required involving specific flight manoeuvres.

Since at high altitude no actual reference atmospheric pressure is measured (like with the ground station at low altitude), this method makes use of taking the difference between measurements (a first pressure measurement at a first aircraft geometry and/or configuration and a second pressure measurement at a second, different aircraft geometry and/or configuration), as shown in equation (3).

$$p_{m_1} - p_{m_2} = \left(p + p_{PEC_1}\right) - \left(p + p_{PEC_2}\right) \qquad (3)$$

This equation holds if the atmospheric static pressure (p) is constant. In this manner the difference in the measured pressure is the same as the difference in the static pressure (equation (4)). Therefore, the same applies for the PEC polynomial as shown in equation (5).

$$\Delta p_m = \Delta P_{PEC} \qquad (4)$$

$$\Delta p_{PEC} = \Delta \left(c_p \frac{1}{2} \rho V^2\right)$$

$$(5)$$

As a result these test results can then be used to extrapolate to altitude the data obtained previously with the CFD and ground station flyby's for arriving at a more extensive determination of the constants in the Taylor expansion series (yielding the possibility of more accurately calculating the position error correction at a wider envelope of flight situations of the aircraft in its diverse geometries and configurations).

In order to assure conditions of constant atmospheric static pressure (constant atmospheric reference static pressure) during a flight manoeuvre, the method in accordance with the present invention provides two embodiments which may be used as alternatives or in combination.

The first embodiment involves a flight test in which the specific flight manoeuvre involves at least one varying speed run parallel to atmospheric isohypses. These isohypses are lines of constant atmospheric static pressure and constant altitude. Before the flight tests, weather prediction models are used to forecast (the location and direction of) these isohypses at high altitude and based thereupon a certain location is selected to perform the flight tests (and it is generally scheduled in synchronisation with Air Traffic Control (ATC)).

At high altitude the wind usually runs parallel to these isohypses. Therefore, once at the desired testing altitude, the wind direction indicated by the Flight Management System (FMS) preferably is used to perform final heading corrections.

Preferably, in accordance with one embodiment of the method according to the present invention, then firstly a constant speed run is performed at the length of the expected varying speed run. In this manner the aircraft performs a "scan" of the atmosphere and it can be observed whether indeed the atmospheric static pressure remains sufficiently constant (thus the presence of the isohypse is checked) and corrections may be carried out for the influence of any atmospheric static pressure fluctuations along the expected isohypse.

During the actual flight test at the desired altitude the aircraft flies along the isohypse while changing its velocity. The change in velocity results in changes of the Mach number M and the angle of attack $\alpha$, and in combination with the differences in static pressure measurements explained above, these data may be used for determining (or further fine tuning) the constants of Equation (2) at the respective altitude.

When, previous to the actual test run, a constant speed run in one direction (heading) has been performed along an isohypse, the aircraft generally will make a teardrop turn for arriving at the starting point of the test run which then is performed in the opposite direction (opposite heading) along the same isohypse.

In one embodiment the varying speed run involves a run during which an acceleration of the aircraft along the isohypse is followed by a deceleration, while making pressure measurements at desired time intervals.

In a preferred embodiment of the method according to the present invention at least a similar second test run is performed in a direction (heading) opposite to the direction (heading) of the first test run. Again a teardrop turn may be used to connect both test runs. The number of test runs may be increased, if desired.

Finally, in one embodiment, again a tear drop turn is performed, followed by a constant speed run (for example in a direction (heading) opposite to the initial constant speed run). In this manner, the change over time in the atmosphere at that location and altitude can be observed as well and taken into account.

The above flight tests and manoeuvres preferably are carried out at different altitudes, for example at intervals of 10.000 feet. This results in a broad envelope in the Mach - angle of attack PEC polynomial plane.

During performing the above flight tests and manoeuvres it is of importance that the aircraft keeps flying at constant pressure altitude during the respective runs and hence preferably the autopilot is used. However, modern autopilots are not sufficiently fit to keep the altitude constant to within very small ranges during a varying speed run. Therefore, GPS altitude differences may be translated into ambient static pressure differences to correct for the relatively small change in altitude during these runs (for example again similar to the procedure using equation (1) as described before with respect to the correction for a difference in altitude during flyby's at a ground station). In addition, generally GPS altitude measurements are used during the flight tests along the isohypses for determining the real altitude, such that the static pressure may be monitored against the real altitude.

The described varying speed runs (for example runs with an acceleration followed by a deceleration), preferably performed at several altitudes, are used to change the Mach number and angle of attack of the aircraft in such a manner that a wider range of the envelope is covered.

Because of the use of the difference between pairs of pressure measurements, this embodiment of the method is referred to as the "delta mode".

According to yet another embodiment of the method according to the present invention which may be used complementary to (but may also be applied instead of) the varying speed runs when the atmospheric static pressure is not sufficiently constant, steep turns are performed at constant speed while taking the pressure measurements. Again, during these steep turns the altitude must be sufficiently stable. Under such conditions the strong Mach number - angle of attack correlation is broken. This means that it is possible to largely vary the angle of attack while keeping the Mach number constant. Thereby a different range is covered in the flight envelope compared to the varying speed runs.

The steep turns may be carried out as so-called windup turns during which the turns become increasingly steeper, thus constantly increasing the angle of attack $\alpha$ for keeping the aircraft at the same altitude.

The invention is not limited to the embodiments described before which may be varied widely within the scope of the invention as defined by the appending claims.

## Claims

1. Method for determining a position error correction on a static pressure measurement at an aircraft flying through a flow field, wherein

$$p_{PEC} = C_p \frac{1}{2} \rho V_{TAS}^2 \qquad (1)$$

with:

    $p_{PEC}$: position error correction
    $C_p$: a non-dimensional pressure coefficient
    $\rho$: the density of the air
    $V_{TAS}$: the true air speed
    and wherein $C_p$ is represented by the following Taylor series expansion

$$C_p = C_0 + C_1 M + C_2 \alpha + C_3 \beta + C_4 M^2 + C_5 \alpha^2 + C_6 \beta^2 + C_7 M\alpha + C_8 \log(R_e) + H.O.T. \qquad (2)$$

with:

    $C_0, C_1, ..$: constants
    M: the Mach number
    $\alpha$: the angle of attack
    $\beta$: the angle of sideslip
    $R_e$: the Reynolds number
    H.O.T.: higher order terms of the Taylor series expansion

    **characterized in that** the constants of the Taylor series expansion are determined by the succession of the following steps:

a) a step of an initial determination of the constants, using calculations based upon computational fluid dynamics and a detailed 3D scan of relevant parts of the aircraft;

b) a step of a validation of the results of step a) by performing low altitude flyby's at a ground station while performing pressure measurements at the aircraft and comparing a static pressure measured at the ground station with the pressure measurements at the aircraft;

c) a step of an extrapolation to altitude of the results from step b) by carrying out flight tests at a specific altitude accompanied by specific flight manoeuvres, during which step a first pressure measurement ($p_{m1}$) is performed followed by performing a number of subsequent pressure measurements ($p_{m2}$) at conditions of constant atmospheric static pressure (p) during said flight tests, wherein the difference between any pair of pressure measurements

$$p_{m_1} - p_{m_2} = \left( p + p_{PEC_1} \right) - \left( p + p_{PEC_2} \right) \qquad (3)$$

with:

$p_{PEC1}$: position error correction of first pressure measurement
$p_{PEC2}$: position error correction of subsequent pressure measurements
yields

$$\Delta p_m = \Delta P_{PEC} \qquad (4)$$

which through

$$\Delta p_{PEC} = \Delta \left( c_p \frac{1}{2} \rho V^2 \right)$$

$$(5)$$

then is used to further validate the extrapolation to altitude.

2. Method according to claim 1, wherein during step c) the flight tests are carried out in parallel to atmospheric isohypses.

3. Method according to claim 2, wherein the specific flight manoeuvres accompanying the flight tests comprise at least one varying speed run along an isohypse.

4. Method according to claim 3, wherein the varying speed run comprises a run during which an acceleration is followed by a deceleration.

5. Method according to claim 3 or 4, wherein the flight tests comprise a succession of at least two varying speed runs in opposite directions along an isohypse.

6. Method according to any of the claim 2-5, wherein during step c) before and/or after carrying out the specific flight manoeuvres a constant speed run is performed along an isohypse while performing pressure measurements and wherein these pressure measurements are used for correcting the influence of any atmospheric static pressure fluctuations.

7. Method according to any of the previous claims, wherein step c) is carried out at different altitudes, for example at intervals of 10.000 feet.

8. Method according to any of the previous claims, wherein during performing the specific flight manoeuvres the aircraft uses its autopilot for maintaining a constant altitude.

9. Method according to claim 8, wherein GPS altitude measurements are used for correction of ambient static pressure measurements due to altitude variations during the specific flight manoeuvres.

10. Method according to any of the claims 2-9, wherein GPS altitude measurements are used during the flight tests along the isohypses for determining the real altitude and for monitoring the static pressure against the real altitude.

11. Method according to claim 1, wherein the specific flight manoeuvres comprise steep turns at constant speed.

12. Method according to claim 11, wherein the steep turns are carried out as so-called windup turns during which the turns become increasingly steeper.

13. Method according to one of the previous claims, wherein step b) further comprises a step of correcting the pressure measurements at the aircraft for a difference in altitude between the ground station and the aircraft, wherein

$$\Delta p = \rho g \Delta h \qquad (6)$$

with:

$\Delta p$: the pressure correction
$\rho$: the density of the air
g: the gravitational constant
$\Delta h$: the difference in altitude between the ground station and the aircraft.

14. Method according to claim 13, wherein the altitude of the aircraft during the low altitude flyby's is determined using a GPS based altitude measurement.

15. Method according to claim 13 or 14, wherein step b) is carried out a number of times in an iterative loop for taking into account a dependency of the density of the air ($\rho$) from the Mach number (M) and thus from the pressure measurement at the aircraft as well as a dependency of the true air speed (TAS) from the Mach number (M) and thus from the pressure measurement at the aircraft.

**Patentansprüche**

1. Verfahren zur Bestimmung einer Positionsfehlerkorrektur bei einer statischen Druckmessung an einem Luftfahrzeug, das ein Strömungsfeld durchfliegt, wobei

$$p_{PEC} = C_p \frac{1}{2} \rho V_{TAS}^2 \qquad (1)$$

wobei:

$p_{PEC}$: Positionsfehlerkorrektur,
$C_p$: ein dimensionsloser Druckkoeffizient,
$\rho$: die Dichte der Luft,
$V_{TAS}$: die wahre Fluggeschwindigkeit,
und wobei $C_p$ durch die folgende Taylor-Reihenentwicklung dargestellt ist:

$$C_p = C_0 + C_1 M + C_2 \alpha + C_3 \beta + C_4 M^2 + C_5 \alpha^2 + C_6 \beta^2 + C_7 M\alpha + C_8 \log(R_e) + H.O.T. \quad (2)$$

wobei:

$C_0$, $C_1$, ...: Konstanten,
M: die Machzahl,
$\alpha$: der Anstellwinkel,
$\beta$: der Schiebewinkel,
$R_e$: die Reynolds-Zahl,
H.O.T.: Terme höherer Ordnung der Taylor-Reihenentwicklung,

**dadurch gekennzeichnet, dass** die Konstanten der Taylor-Reihenentwicklung durch die Abfolge der folgenden Schritte bestimmt werden:

a) einen Schritt einer Anfangsbestimmung der Konstanten mit Hilfe von Berechnungen auf der Grundlage der numerischen Strömungsmechanik und eines detaillierten 3D-Scans relevanter Teile des Luftfahrzeugs;
b) einen Schritt einer Validierung der Ergebnisse von Schritt a) durch Durchführen von Vorbeiflügen in niedriger Höhe an einer Bodenstation, während Druckmessungen am Luftfahrzeug durchgeführt werden und ein an der Bodenstation gemessener statischer Druck mit den Druckmessungen am Luftfahrzeug verglichen wird;
c) einen Schritt einer Höhenextrapolation der Ergebnisse aus Schritt b) durch Durchführen von Flugtests in einer spezifischen Höhe in Begleitung von spezifischen Flugmanövern, wobei im Verlauf dieses Schritts eine erste Druckmessung ($p_{m1}$) durchgeführt wird, gefolgt von Durchführen einer Anzahl anschließender Druckmessungen ($p_{m2}$) unter Bedingungen eines konstanten statischen Luftdrucks (p) während der Flugtests, wobei die Differenz zwischen jedem Paar Druckmessungen

$$p_{m_1} - p_{m_2} = \left( p + p_{PEC_1} \right) - \left( p + p_{PEC_2} \right) \qquad (3)$$

wobei:

$p_{PEC1}$: Positionsfehlerkorrektur der ersten Druckmessung,
$p_{PEC2}$: Positionsfehlerkorrektur anschließender Druckmessungen,
ergibt:

$$\Delta p_m = \Delta P_{PEC} \qquad (4)$$

was über

$$\Delta p_{PEC} = \Delta \left( c_p \frac{1}{2} \rho V^2 \right)$$

$$(5)$$

danach verwendet wird, die Höhenextrapolation weiter zu validieren.

2. Verfahren nach Anspruch 1, wobei im Verlauf von Schritt c) die Flugtests parallel zu atmosphärischen Isohypsen durchgeführt werden.

3. Verfahren nach Anspruch 2, wobei die spezifischen Flugmanöver in Begleitung der Flugtests mindestens einen Durchlauf mit variierender Geschwindigkeit entlang einer Isohypse aufweisen.

4. Verfahren nach Anspruch 3, wobei der Durchlauf mit variierender Geschwindigkeit einen Durchlauf aufweist, in dessen Verlauf eine Beschleunigung von einer Verlangsamung gefolgt wird.

5. Verfahren nach Anspruch 3 oder 4, wobei die Flugtests eine Abfolge mindestens zweier Durchläufe mit variierender Geschwindigkeit in Gegenrichtungen entlang einer Isohypse aufweisen.

6. Verfahren nach einem der Ansprüche 2 bis 5, wobei im Verlauf von Schritt c) vor und/oder nach Durchführung der spezifischen Flugmanöver ein Durchlauf mit konstanter Geschwindigkeit entlang einer Isohypse durchgeführt wird, während Druckmessungen durchgeführt werden, und wobei diese Druckmessungen zum Korrigieren des Einflusses etwaiger statischer Luftdruckschwankungen verwendet werden.

7. Verfahren nach einem der vorstehenden Ansprüche, wobei Schritt c) in unterschiedlichen Höhen durchgeführt wird, beispielsweise in Intervallen von 10.000 ft.

8. Verfahren nach einem der vorstehenden Ansprüche, wobei im Verlauf der Durchführung der spezifischen Flugmanöver das Luftfahrzeug seinen Autopiloten zur Beibehaltung einer konstanten Höhe verwendet.

9. Verfahren nach Anspruch 8, wobei GPS-Höhenmessungen zur Korrektur statischer Umgebungsdruckmessungen infolge von Höhenvariationen im Verlauf der spezifischen Flugmanöver verwendet werden.

10. Verfahren nach einem der Ansprüche 2 bis 9, wobei GPS-Höhenmessungen im Verlauf der Flugtests entlang der Isohypsen zur Bestimmung der realen Höhe und zur Überwachung des statischen Drucks als Funktion der realen Höhe verwendet werden.

11. Verfahren nach Anspruch 1, wobei die spezifischen Flugmanöver Steilkurven mit konstanter Geschwindigkeit aufweisen.

12. Verfahren nach Anspruch 11, wobei die Steilkurven als so genannte "Windup Turns" durchgeführt werden, in deren Verlauf die Kurven zunehmend steiler werden.

13. Verfahren nach einem der vorstehenden Ansprüche, wobei Schritt b) ferner einen Schritt des Korrigierens der Druckmessungen am Luftfahrzeug wegen einer Höhendifferenz zwischen der Bodenstation und dem Luftfahrzeug aufweist, wobei

$$\Delta p = \rho g \Delta h \qquad (6)$$

wobei:

> $\Delta p$: die Druckkorrektur,
> $\rho$: die Dichte der Luft,
> g: die Gravitationskonstante,
> $\Delta h$: die Höhendifferenz zwischen der Bodenstation und dem Luftfahrzeug.

14. Verfahren nach Anspruch 13, wobei die Höhe des Luftfahrzeugs im Verlauf der Vorbeiflüge in niedriger Höhe mit Hilfe einer GPS-basierten Höhenmessung bestimmt wird.

15. Verfahren nach Anspruch 13 oder 14, wobei Schritt b) mehrmals in einer iterativen Schleife zur Berücksichtigung einer Abhängigkeit der Dichte der Luft ($\rho$) von der Machzahl (M) und somit von der Druckmessung am Luftfahrzeug sowie einer Abhängigkeit der wahren Fluggeschwindigkeit (TAS) von der Machzahl (M) und somit von der Druckmessung am Luftfahrzeug durchgeführt wird.

**Revendications**

1. Procédé pour déterminer une correction d'erreur de position sur une mesure de pression statique au niveau d'un aéronef volant à travers un champ d'écoulement, dans lequel

$$p_{PEC} = C_p \frac{1}{2} \rho V_{TAS}^{\,2} \qquad (1)$$

avec :

> $p_{PEC}$ : correction d'erreur de position
> $C_p$ : un coefficient de pression sans dimension
> p : la densité de l'air
> $V_{TAS}$ : la vitesse vraie
> et dans lequel $C_p$ est représenté par le développement en série de Taylor suivant

$$C_p = C_0 + C_1 M + C_2 \alpha + C_3 \beta + C_4 M^2 + C_5 \alpha^2 + C_6 \beta^2 + C_7 M\alpha + C_8 \log(R_e) + H.O.T. \quad (2)$$

avec :

$C_0, C_1, \dots$ : des constantes
M : le nombre de Mach
$\alpha$ : l'angle d'attaque
$\beta$ : l'angle de dérapage
$R_e$ : le nombre de Reynolds
H.O.T. : termes d'ordre supérieur du développement en série de Taylor

**caractérisé en ce que** les constantes du développement en série de Taylor sont déterminées par la succession des étapes suivantes :

a) une étape de détermination initiale des constantes, à l'aide de calculs basés sur une mécanique des fluides numérique et un balayage 3D détaillé des parties pertinentes de l'aéronef ;

b) une étape de validation des résultats de l'étape a) en réalisant des survols à basse altitude au niveau d'une station au sol tout en réalisant des mesures de pression au niveau de l'aéronef et en comparant une pression statique mesurée au niveau de la station au sol avec les mesures de pression au niveau de l'aéronef ;

c) une étape d'extrapolation à l'altitude des résultats de l'étape b) en réalisant des essais en vol à une altitude spécifique accompagnés de manoeuvres spécifiques de vol, au cours de laquelle étape une première mesure de pression ($p_{m1}$) est réalisée suivie par la réalisation d'un certain nombre de mesures de pression ($p_{m2}$) ultérieures dans des conditions de pression statique atmosphérique constante (p) pendant lesdits essais en vol, dans lequel la différence entre n'importe quelle paire de mesures de pression

$$p_{m_1} - p_{m_2} = \left( p + p_{PEC_1} \right) - \left( p + p_{PEC_2} \right) \tag{3}$$

avec :

$p_{PEC1}$ : correction d'erreur de position de la première mesure de pression
$p_{PEC2}$ : correction d'erreur de position de mesures de pression ultérieures
donne

$$\Delta p_m = \Delta P_{PEC} \tag{4}$$

qui à travers

$$\Delta p_{PEC} = \Delta \left( c_p \frac{1}{2} \rho V^2 \right) \tag{5}$$

est ensuite utilisée pour valider davantage l'extrapolation à l'altitude.

2. Procédé selon la revendication 1, dans lequel, lors de l'étape c), les essais en vol sont réalisés en parallèle à des isohypses atmosphériques.

3. Procédé selon la revendication 2, dans lequel les manoeuvres spécifiques de vol accompagnant les essais en vol comprennent au moins un parcours à vitesse variable le long d'une isohypse.

4. Procédé selon la revendication 3, dans lequel le parcours à vitesse variable comprend un parcours au cours duquel une accélération est suivie d'une décélération.

5. Procédé selon la revendication 3 ou 4, dans lequel les essais en vol comprennent une succession d'au moins deux parcours à vitesse variable dans des directions opposées le long d'une isohypse.

**6.** Procédé selon l'une quelconque des revendications 2 à 5, dans lequel, lors de l'étape c) avant et/ou après la réalisation des manoeuvres spécifiques de vol, un parcours à vitesse constante est réalisé le long d'une isohypse tout en réalisant des mesures de pression et dans lequel ces mesures de pression sont utilisées pour corriger l'influence de n'importe quelle fluctuation de la pression statique atmosphérique.

**7.** Procédé selon l'une quelconque des revendications précédentes, dans lequel l'étape c) est réalisée à différentes altitudes, par exemple à des intervalles de 10 000 pieds.

**8.** Procédé selon l'une quelconque des revendications précédentes, dans lequel, lors de la réalisation des manoeuvres spécifiques de vol, l'aéronef utilise son pilote automatique pour maintenir une altitude constante.

**9.** Procédé selon la revendication 8, dans lequel des mesures d'altitude par GPS sont utilisées pour corriger des mesures de pression statique ambiante dues à des variations d'altitude pendant les manoeuvres spécifiques de vol.

**10.** Procédé selon l'une quelconque des revendications 2 à 9, dans lequel des mesures d'altitude par GPS sont utilisées pendant les essais en vol le long des isohypses pour déterminer l'altitude réelle et pour surveiller la pression statique par rapport à l'altitude réelle.

**11.** Procédé selon la revendication 1, dans lequel les manoeuvres spécifiques de vol comprennent des virages serrés à vitesse constante.

**12.** Procédé selon la revendication 11, dans lequel les virages serrés sont réalisés comme des virages dits forcés au cours desquels les virages deviennent de plus en plus serrés.

**13.** Procédé selon l'une des revendications précédentes, dans lequel l'étape b) comprend en outre une étape de correction des mesures de pression au niveau de l'aéronef pour une différence d'altitude entre la station au sol et l'aéronef, dans lequel

$$\Delta p = \rho g \Delta h \qquad\qquad (6)$$

avec :

$\Delta p$ : la correction de pression
$\rho$ : la densité de l'air
g : la constante gravitationnelle
$\Delta h$ : la différence d'altitude entre la station au sol et l'aéronef.

**14.** Procédé selon la revendication 13, dans lequel l'altitude de l'aéronef pendant les survols à basse altitude est déterminée en utilisant une mesure d'altitude basée sur le GPS.

**15.** Procédé selon la revendication 13 ou 14, dans lequel l'étape b) est réalisée un certain nombre de fois dans une boucle itérative pour prendre en compte une dépendance de la densité de l'air (p) par rapport au nombre de Mach (M) et donc par rapport à la mesure de pression au niveau de l'aéronef, ainsi qu'une dépendance de la vitesse vraie (TAS) par rapport au nombre de Mach (M) et ainsi par rapport à la mesure de la pression au niveau de l'aéronef.

**EP 3 919 869 B1**

## REFERENCES CITED IN THE DESCRIPTION

### Patent documents cited in the description

- CN 110346605 A